# EUROPEAN PATENT SPECIFICATION

(11) **EP 2 508 043 B1**
(45) Date of publication and mention of the grant of the patent: **16.10.2013**
(21) Application number: 10805500.5
(22) Date of filing: 29.11.2010
(51) Int. Cl.: H05B 6/12, H05B 6/36, H05B 6/06

(54) **INDUCTION COOKING TOP**
INDUKTIONSKOCHPLATTE
TABLE DE CUISSON À INDUCTION

(30) Priority: 01.12.2009 IT TO20090941
(43) Date of publication of application: 10.10.2012
(73) Proprietor: Indesit Company, S.p.A., 60044 Fabriano (AN) (IT)
(72) Inventor: D'ALESSANDRO, Luisa, I-67038 Scanno (AQ) (IT); BEATO, Alessio, I-60044 Fabriano (AN) (IT)
(74) Representative: Santonicola, Paolo
(86) International application number: PCT/IB2010/055478
(87) International publication number: WO 2011/067708

(56) References cited:
- EP-A1- 0 921 711
- EP-A1- 2 048 914
- WO-A1-93/04567
- DE-A1- 19 708 335

## Description

The present invention relates to an induction cooking top according to the preamble of claim 1.

Induction cooking tops are devices which exploit the phenomenon of induction heating for food cooking purposes.

In such cooking tops, the pot is positioned over a top made of glass-ceramic material, which in turn contains inductors comprising copper wire windings where an oscillating current (e.g. an alternating current) is circulated to produce an oscillating electromagnetic field.

This electromagnetic field has the main effect that a parasitic current is induced inside the pot, which is made of an electrically conductive material. The parasitic current circulating in the pot produces heat by dissipation; said heat is generated only within the pot and acts without heating the cooking top.

These flameless cooking tops are more efficient than electric ones (i.e. a greater fraction of the absorbed electric power is converted into heat used for heating the pot). In addition, induction cooking tops are safer to use, due to the absence of hot surfaces or flames, thus reducing the risk of burns or fire.

Since heat is generated by induced currents, the cooking top control system monitors the currents flowing through the windings; in this way, the power supplied to each inductor can be adjusted automatically, which is especially useful when the pot does not cover the inductor entirely, so as to adapt the supplied power to the pot size. Moreover, said current monitoring allows to automatically detect the presence of a pot over the inductors and to automatically turn off the latter when the pot is removed from the surface.

In order to obtain the best food cooking results by heating the pot effectively, the winding system must be such as to provide a homogeneous electromagnetic field in the area corresponding to the pot base. Since pots having different shapes and dimensions may be placed over the same cooking top, the shape and arrangement of the windings play an especially important role.

Patent EP0619693 shows an induction cooking top fitted with windings arranged around elongated rectangular elements with an empty inner space, to house multiple small pots on one element or a single, larger pot on multiple inductors. This solution has the drawback that it uses a large (and therefore expensive) inductor to cover each cooking area. In order to cover adjacent cooking areas, multiple inductors are arranged side by side.

Patent EP1575336 shows an induction cooking top wherein the windings are arranged in a modular manner close to one another, whereas patent EP1858300 shows a cooking top wherein the windings are arranged at multiple levels so as to partially overlap one another. Although these devices provide homogeneous pot heating, they are however expensive because of the large number of windings employed; in addition, these devices also suffer from the drawback that such a large number of windings requires a complex control system.

The object of the present invention is to provide an induction cooking top capable of solving the problems suffered by the prior art.

In particular, it is one object of the present invention to provide a cooking top which is alternative to those known in the art and which can generate a uniform electromagnetic field in the cooking areas without using an excessive number of windings, so as to homogeneously heat pots of different sizes.

It is another object of the present invention to provide an induction cooking top which is simpler and less expensive to manufacture.

Finally, it is a further object of the present invention to provide a cooking top which is easier to control and to adjust compared to prior-art solutions.

These and other objects of the present invention are achieved through a cooking top incorporating the features set out in the appended claims, which are intended as an integral part of the present description.

The present invention is based on the general idea of providing the cooking top with at least three windings having the shape of an elongated ring, wherein the longitudinal axes of said at least three windings are arranged on the cooking top in at least two different directions, so that the projections of said longitudinal axes on a plane define a closed area. This solution allows to overcome the drawbacks of the prior art.

In fact, compared to cooking tops having windings shaped like parallel elongated rings, this solution allows to generate a uniform electromagnetic field with a smaller number of elements, while the inductor size and cost remains equal, thus leading to lower overall costs and simpler construction.

Compared to cooking tops fitted with overlapping circular or hexagonal ring windings which cover the entire area of the cooking top, this solution ensures a sufficiently uniform electromagnetic field while reducing the number of heating elements and therefore the complexity of the control system; it follows that the cooking top according to the present invention is more effective and easier to control.

Advantageously, the cooking top is equipped with additional windings whose projections fall within the closed area defined by the projections of the outer windings. This provides a more effective heating of variously-sized pots placed on the cooking top according to the present invention. Preferably, then, the windings whose projections fall within said closed area are shaped like an elongated ring and are arranged in a manner such that their longitudinal axes define, together with the longitudinal axes of the outer windings, a plurality of additional closed surfaces.

According to a preferred embodiment, the projection of each winding partly overlaps those of other windings, at least at both ends of the windings in the longitudinal direction. This solution has the advantage that it improves the uniformity of the electromagnetic field.

According to a preferred embodiment, within the closed area there are windings shaped like elongated rings overlapping one another and arranged in different directions.

In particular, a chessboard-like inductor layout (i.e. a plurality of inductors arranged in two orthogonal directions) proves to be very advantageous in terms of magnetic field uniformity.

Advantageously, the cooking top comprises some ferrite underneath the pot support surface and around the windings; this solution offers the advantage that the uniformity of the electromagnetic field is further improved.

The presence of a pot on the cooking top causes the magnetic field to close onto the pot itself, thus causing power to be transferred towards the pot. The bigger the pot, the more power can be transferred thereto. In a preferred solution, therefore, the control system can, based on the monitoring of the currents circulating in the windings, detect the power actually transferred and consequently adjust the current supplied to the inductors; in this manner, the control system automatically adapts the absorbed electric power to the size of the pot, thus maintaining a high degree of efficiency in the power transfer process. Further objects and advantages of the present invention will become more apparent from the following detailed description and from the annexed drawings, which are supplied by way of non-limiting example, wherein:
- Fig. 1A is a top view of a first embodiment of a cooking top according to the present invention.
- Fig. 1B is a detailed view of one of the windings used in the cooking top of Fig. 1A.
- Fig. 1C shows the cooking top of Fig. 1A with a simplified indication of the directions of circulation of the current in the windings.
- Fig. 2A is a top view of a second embodiment of a cooking top according to the present invention.
- Fig. 2b is a side view of the cooking top of Fig. 2A.
- Fig. 2bC is a three-dimensional view of the cooking top of Fig. 2A.
- Fig. 3 shows the cooking top of Fig. 1A with the area covered by a pot highlighted.
- Fig. 4 shows the cooking top of 1A with the area covered by a bigger pot than the one of Fig. 3 highlighted.
- Fig. 5 shows a third embodiment of a cooking top according to the present invention.
- Fig. 6 shows a fourth embodiment of the cooking top according to the present invention.
- Fig. 7 shows a fifth embodiment of the cooking top according to the present invention.
- Fig. 8 shows a sixth embodiment of the cooking top according to the present invention.
- Fig. 9 shows a seventh embodiment of the cooking top according to the present invention.
- Fig. 10 shows an eighth embodiment of the cooking top according to the present invention.
- Fig. 11 shows a ninth embodiment of the cooking top according to the present invention.

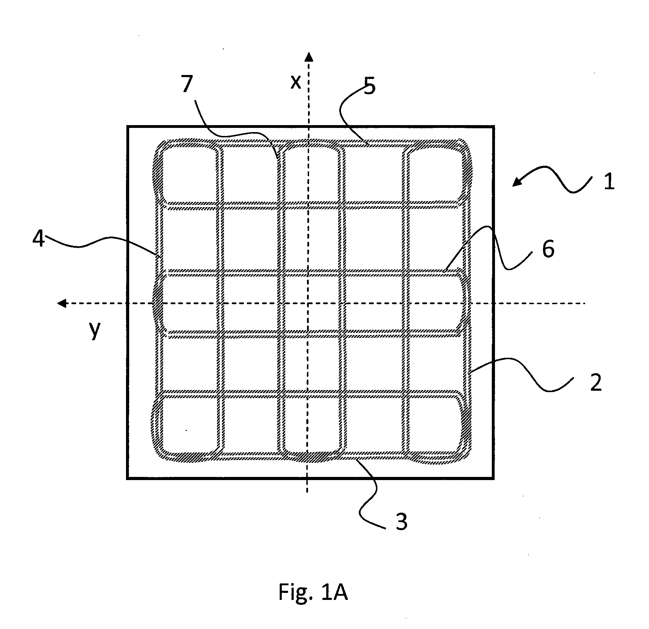

The example of Fig. 1A shows a top view of a first embodiment of the cooking top 1 according to the present invention.

The windings 2, 3, 4 and 5 are arranged in a manner such that their projections on the plane 1 form a square along the perimeter of the surface 1, their ends partially overlapping the adjacent windings; for example, the ends of the winding 2 partially overlap the windings 3 and 5.

Within the perimeter formed by the projections of the windings 2, 3, 4 and 5 there are the projections of the windings 6 and 7; the latter are arranged orthogonally and partially overlap each other. In the example of Fig. 1A, the six windings are arranged in two different directions (x and y), in particular orthogonal to each other.

Also the ends of the projections of each of the windings 6 and 7 partially overlap the projections of the outer windings 2, 3, 4 and 5, and even protrude slightly from the area defined by the latter's projections.

Preferably, the windings 2, 3, 4, 5, 6 and 7 have the same dimensions, so that they can be manufactured with better economy of scale and can constitute a chessboard-like layout which, as will be explained hereafter, ensures good field distribution.

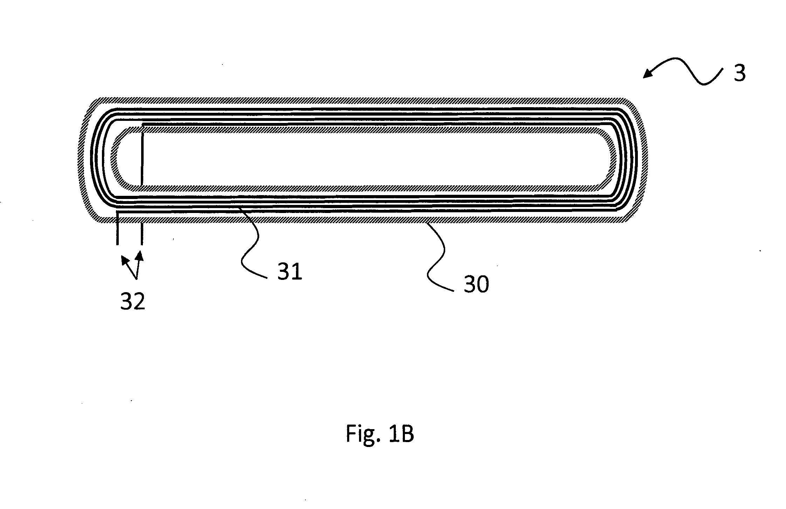

Fig. 1B illustrates in detail one of the windings used in the cooking top 1, e.g. the winding 3. This electric winding comprises at least one coil 31 made of electrically conductive material wound around a central support; this coil is made out of small-gauge conductive wires, typically made of copper. At the ends of the coil there are the contacts 32 used for supplying power to the winding.

In the example of Fig. 1B the coils are wound around an elongated central body 3; therefore, the windings are shaped like a substantially rectangular elongated ring.

For the purposes of the present description, the definition "shaped like a substantially rectangular elongated ring" refers to a shape close to the one of a rectangle with smoothed edges, whose minor sides are either straight or curvilinear with a radius of curvature equal to or greater than half the width of the inductor. In particular, it is advantageous that the radius of curvature is at least twice the width of the inductor, i.e. the minor side of the rectangle that circumscribes the winding.

Of course, other elongated ring shapes may be used as well, e.g. ovoid shaped rings.

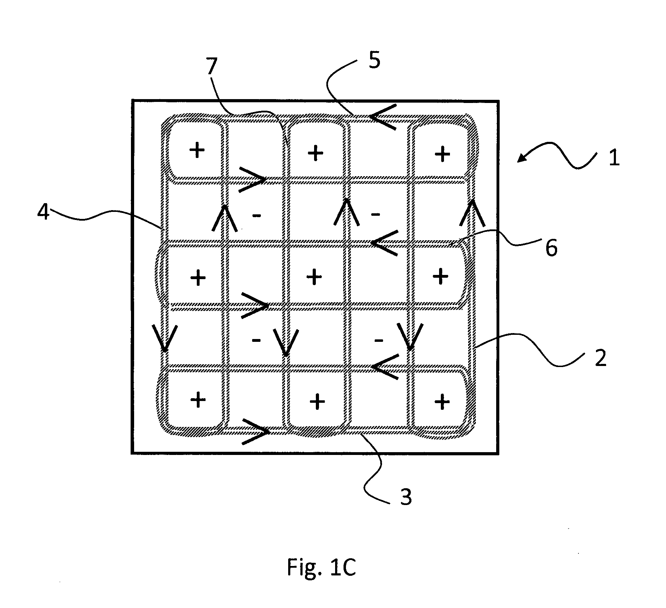

Fig. 1C shows the cooking top 1 and highlights a possible configuration of the directions of circulation of the current in the windings at a certain time instant.

The arrows indicate the directions of the currents circulating in the windings 2, 3, 4, 5, 6 and 7 at a certain time instant. The inductors may, in fact, be supplied with an alternating current whose direction changes over time; however, in the example of Fig. 1C, at each time instant the directions of the currents circulating in the inductors arranged in a certain direction are all equal. This is because the inductors arranged in the same direction are suitably connected to the power supply line.

In the intersection areas between the windings' projections there are portions where the currents only circulate counterclockwise (indicated by +, nine in total) or clockwise (indicated by -, four in total). In these portions the oscillating electromagnetic field has constructive effects and is respectively outgoing or incoming relative to the plane, so that there is greater field intensity.

The overlapping areas substantially behave like coils having a substantially square shape. Also in the remaining plane portions (not indicated by any sign in Fig. 1C), where the currents in the overlapping inductors flow in opposite directions, the magnetic field is distributed in a similar manner as in the areas where the currents in the inductors flow in the same direction. Such a field distribution is due to the edge effects of the adjacent square coils.

The direction of the currents circulating in the windings is determined by the type of connection (in particular, in series) and by the direction in which the copper wire is wound (see Fig. 1B).

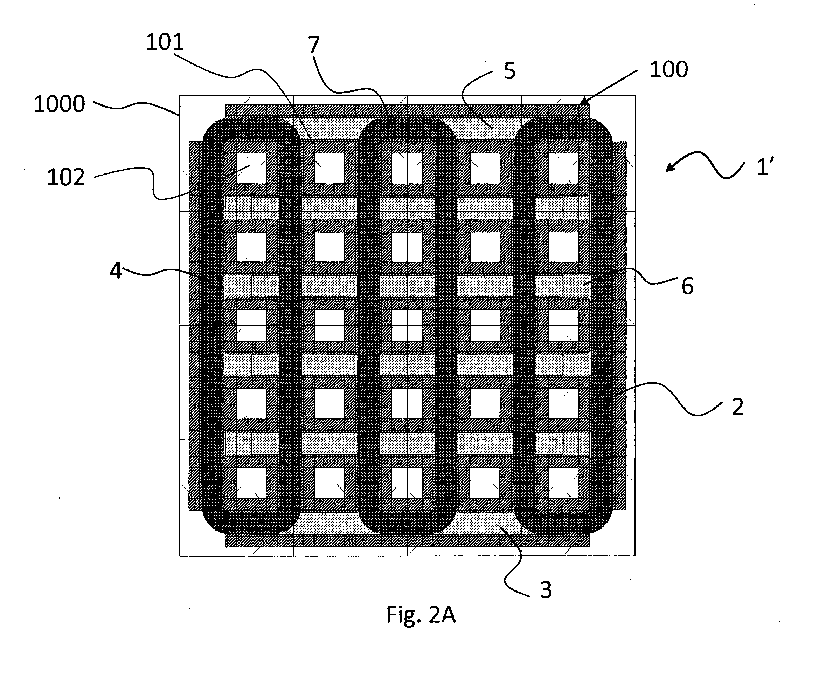

Fig. 2A shows a second embodiment of a cooking top 1' according to the present invention. The cooking top 1' comprises a ferrite matrix 100, or a matrix made of a different iron alloy, arranged underneath the cooking top and surrounding the windings; the presence of ferrite in the cooking top ensures a better distribution of the magnetic induction.

Preferably the ferrite matrix comprises embossed profiles 101 which extend from the surface while remaining adjacent to, in particular surrounding, the inductors.

These profiles 101 have the effect of further improving the confinement of the electromagnetic field lines within the region around the inductors; the ferrite also has the effect of improving the equivalent electric load seen by the inductor, thereby improving the electric adaptation of the latter.

The profiles 101 preferably comprise sunken portions 102 not occupied by ferrite in the areas farthest from the windings. In fact, experimental tests have shown that the beneficial effects of the ferrite would be less evident in those areas of the cooking top. Therefore, in a preferred solution the profiles 101 are so shaped as to not occupy these portions 102, leading to material savings and to a lighter cooking top.

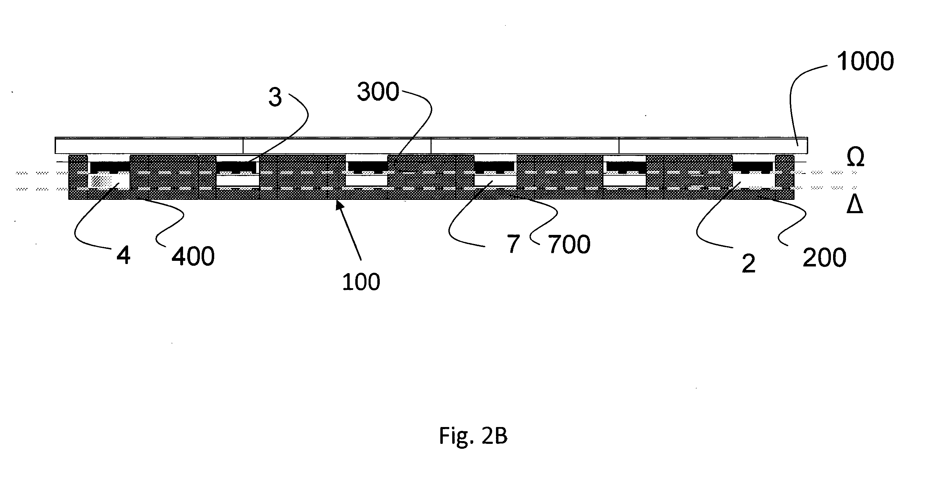

Fig. 2B shows a side view of the cooking top 1'. The support surface 1000 of the cooking top 1' is made of glass-ceramic material (or another magnetically permeable material) which covers the windings from above and allows pots to be laid thereon.

Underneath the surface 1000 there are the inductors with the respective electric windings, which represent the active part of the inductors themselves.

The windings of the inductors are arranged in two different planes Ω and Δ, so that they can overlap without making electric contact. For this purpose, each winding 2, 3, 4 and 7 is placed on a support portion 200, 300, 400 and 700, respectively. This support portion is in this example provided by the ferrite matrix 100 that surrounds the windings; as shown in Fig. 2B, in one embodiment the various support portions may belong to a structure which is common to multiple windings arranged in one plane, but different solutions are conceivable as well.

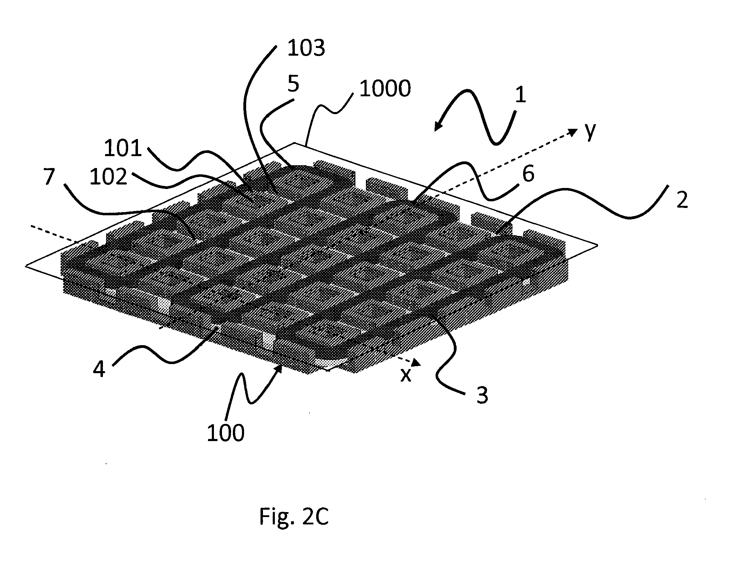

The example of Fig. 2C shows a perspective view of the cooking top 1'; it can be noticed that the ferrite matrix 100 is shaped with variable-depth grooves 103 for housing the electric windings in parallel planes, thus allowing the windings to overlap without making electric contact. Around the grooves 103 there are the embossed profiles 101 and the sunken portion 102 already described above.

Preferably, the three windings 2, 4 and 7, arranged with their longitudinal axes in the direction x, are positioned at a lower level, while the three windings 3, 5 and 6, arranged with their longitudinal axes in the direction y (orthogonal to x), are positioned at a higher level (i.e. closer to the support surface 1000).

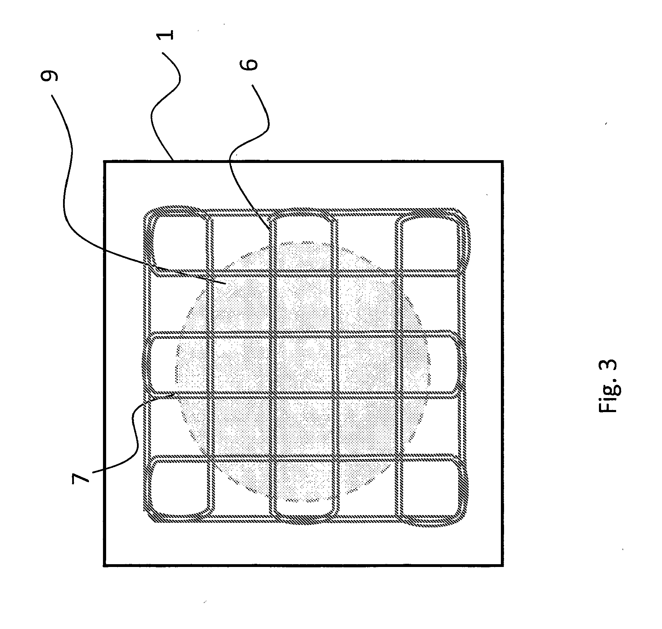

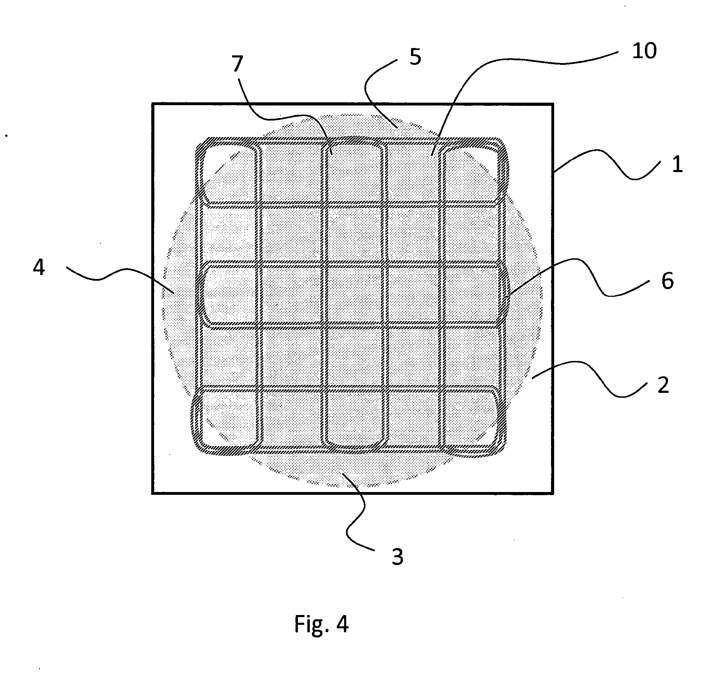

Figs. 3 and 4 schematise the operation of the cooking top 1 according to a preferred example.

As shown in Fig. 3, when the size of a pot 9, or in general any metallic container, is such that it only partially covers the windings 6 and 7, the electromagnetic field generated by the windings 6 and 7 in the region under the pot causes the pot to heat up. Since the electromagnetic field has a higher intensity at the windings, in particular at the intersection surfaces between the projections of the profiles of these windings, in the situation shown herein there are multiple areas of maximum electromagnetic field in the region under the pot; this ensures a more effective and uniform heating of the pot.

Also in the case illustrated in Fig. 4, when the size of the pot 10 is such that it covers all of the windings 2, 3, 4, 5, 6 and 7, there will be multiple areas of maximum electromagnetic field in the region under the pot, which provides a more effective and uniform heating of the pot.

This solution also has the technical effect of improving the cooking of the foods because, thanks to the particular arrangement of the windings, it ensures a homogeneous electromagnetic field under the entire pot surface.

Advantageously, this technical effect is achieved by means of a smaller number of windings (only six in this case) than in prior-art solutions, which use a large number of inductors to cover the whole pot surface.

Furthermore, the cooking top can preferably recognise, according to per se known methods (e.g. using proximity sensors or measuring the current in the inductors' windings) the presence or absence of pots on the surface 1000.

If the cooking top 1 does not detect the presence of any pots, then it will cut out the current flow in the windings.

In the present invention, the electronic circuit that controls the inductors is simplified compared to prior-art solutions, which, aiming at making the electromagnetic field uniform over the cooking top, proposed the use of many overlapping circular inductors covering the entire surface of the cooking top.

In fact, this arrangement of the windings allows to create an electromagnetic field distribution equivalent to that which would be generated by a multitude of smaller windings placed in the intersection areas between the projections of the windings' profiles, thus attaining a field distribution similar to that obtainable by using multiple small inductors arranged side by side. Such a result is however achieved by using a smaller number of inductors.

The reduction in the number of inductors allows for a simplified control of the cooking top; advantageously then, due to the particular layout of the windings, said control may be further simplified by grouping together multiple windings into one control area. Advantageously, the windings may be grouped according to the direction in which they are arranged, e.g. by connecting in series inductors having parallel longitudinal axes. As an alternative, it is conceivable to group the inductors into areas preferably covered by differently-sized pots, e.g. inner and outer windings.

This solution has the effect of reducing the costs associated with the presence of complex inductor control systems.

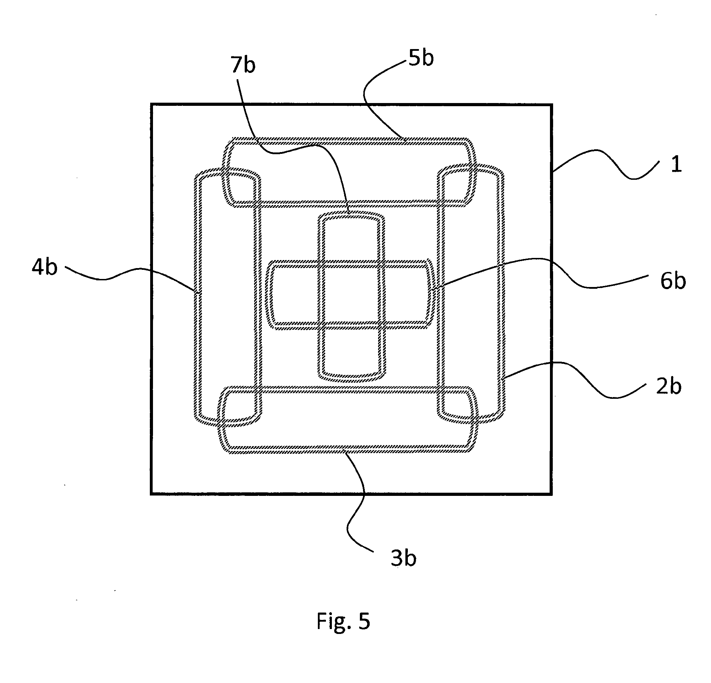

The example of Fig. 5 illustrates a third embodiment of the cooking top 1 according to the present invention, wherein the central windings of Fig. 1 are replaced by the windings 6b and 7b. The latter have the same orthogonal layout as in Fig. 1, but their ends do not overlap, not even partially, the outer windings 2b, 3b, 4b and 5b, whose ends overlap only partially adjacent windings.

Though less preferable than the examples of Figs. 1 and 2 previously described, also in this case good electromagnetic field uniformity can be attained, in the sense explained above, because the inductors are distributed in the plane in a manner such that closed areas are defined where the circulating currents substantially reproduce the field distribution created by coils smaller than those of the inductors employed.

Based on this principle, it is therefore possible to conceive different layouts of the inductors in the cooking top.

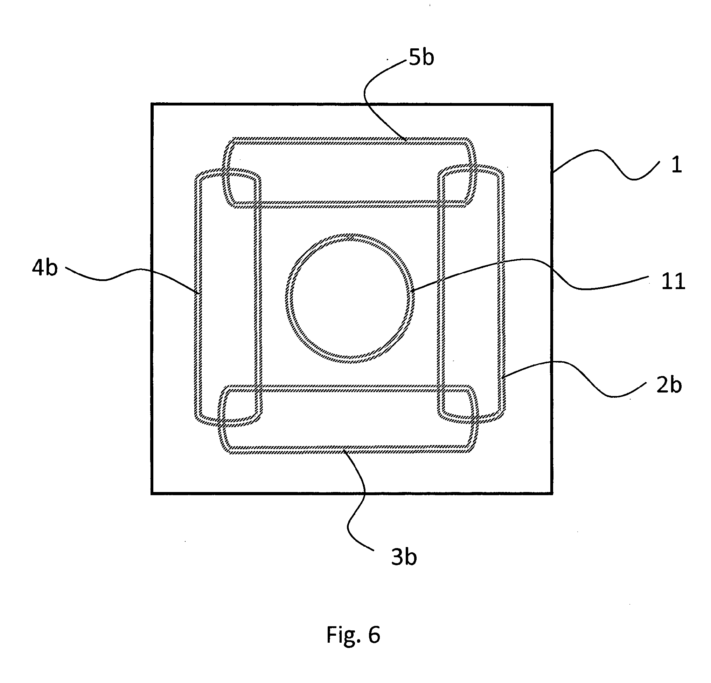

The example of Fig. 6 illustrates a fourth embodiment of the cooking top 1 which shows how the central winding may have any shape, in this case a circumference 11, so long as it is adapted to heat a small pot (smaller than the closed area defined by the peripheral windings 2b, 3b, 4b and 5b) placed thereon.

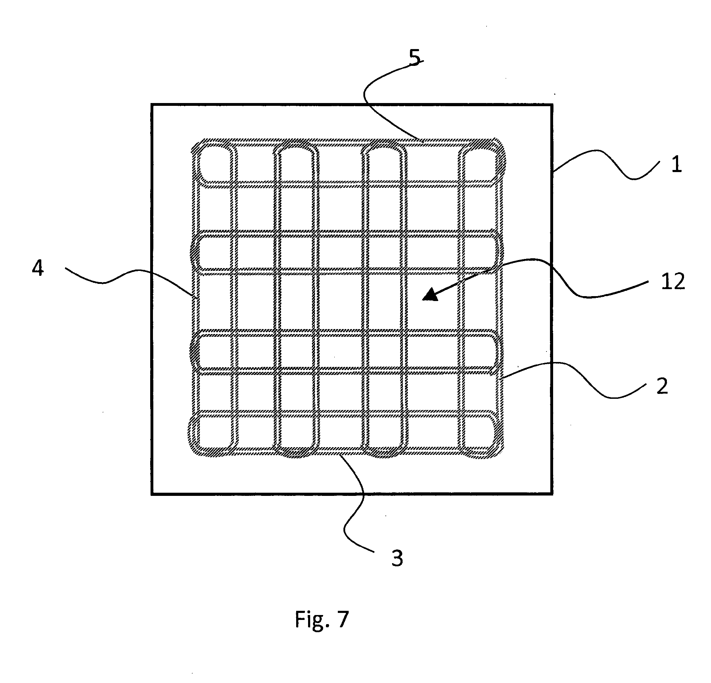

The example of Fig. 7 illustrates a fifth embodiment of the cooking top, wherein the central windings form an orthogonal grid 12, thicker than that of Fig. 1 because it includes four windings. This difference has the technical effect of further improving the homogeneity of the electromagnetic field, and therefore of the heat acting upon the pot.

It must be pointed out that the arrangement of the windings along two orthogonal axes is only a preferred embodiment. In fact, it would be possible to arrange the windings in non-orthogonal directions, at angles greater or smaller than 90 degrees. In such a case as well, the windings' projections will define a closed area in the plane.

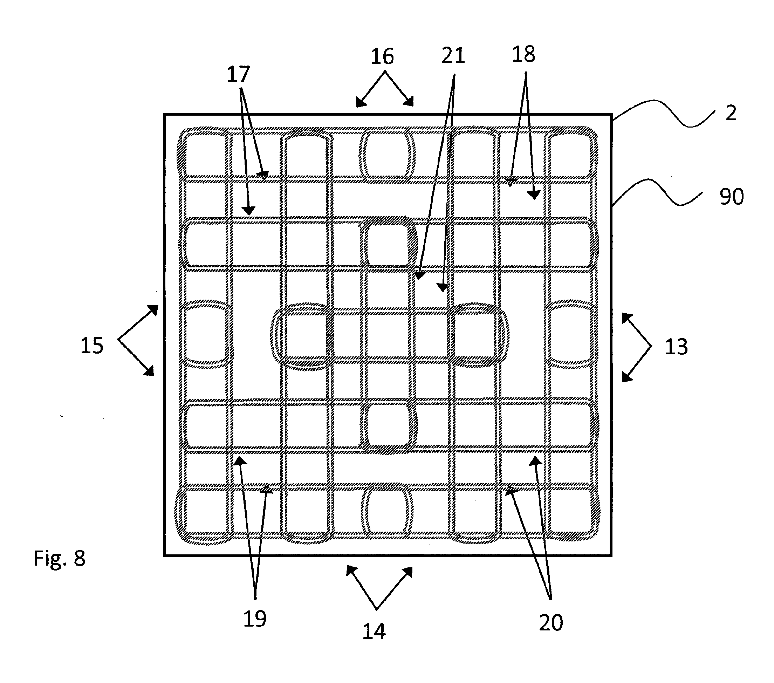

The example of Fig. 8 illustrates a sixth embodiment of the cooking top according to the present invention, which allows to effectively heat a larger cooking surface 2 than the preceding examples. In fact, according to this embodiment the windings used have the same size as those of the preceding examples, but they are arranged differently. The outer edge of the cooking top is delimited by the projections of pairs of windings arranged along the same straight line 13, 14, 15 and 16, which allow to cover a larger area. The projections of these windings define a closed area within which there are pairs of windings arranged orthogonally to one another 17,18,19,20, whose projections have two ends partially overlapping the inner edge and two ends partially overlapping adjacent windings. Also, within said area there are a pair of windings 21 arranged orthogonally to each other and forming the centre of the cooking top.

According to this embodiment, within the closed area defined by the projections of the outermost windings 13,14,15,16 there are some inner windings 17,18,19,20 that define an additional perimeter which surrounds a closed area containing the windings 21.

The windings are thus so distributed as to define several smaller closed areas one within the other.

The cooking top thus conceived can distribute heat better onto variable-sized pots.

By using just one typology of windings arranged on the cooking top according to the present teachings, it is therefore possible to create cooking areas which, though having different dimensions, are characterised by a similarly homogeneous electromagnetic field distribution and can therefore also heat small pots with similar effectiveness.

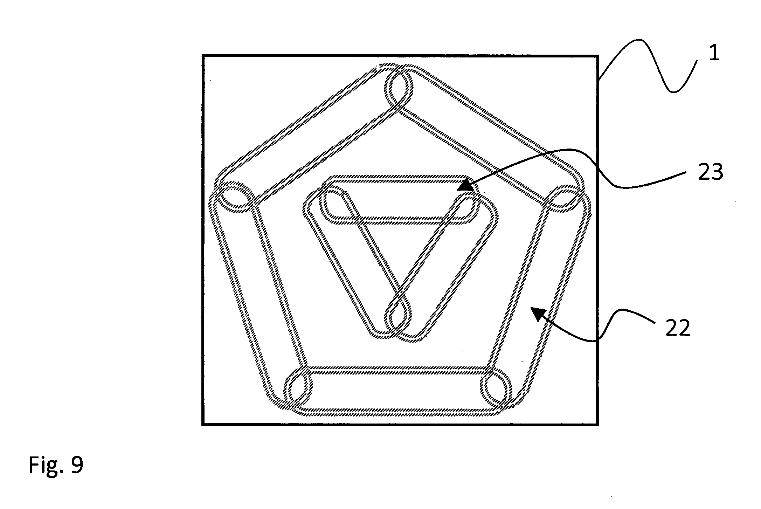

The example of Fig. 9 illustrates a seventh embodiment of the cooking top according to the present invention, wherein the windings are arranged in a manner such that the projections of the respective longitudinal axes define concentric closed areas in a plane, e.g. shaped like regular polygons; in the example of Fig. 9 these areas are shaped like a pentagon 22 (outermost windings) and a triangle 23 (inside the pentagon).

Furthermore, for example, different layouts are also conceivable around a common centre, with regular or irregular polygons comprising elongated windings.

It is apparent that many changes may be made to the present invention by those skilled in the art without departing from the protection scope thereof as stated in the appended claims.

The windings' projections may not overlap one another; the adjacent portions thereof may be contiguous or very close.

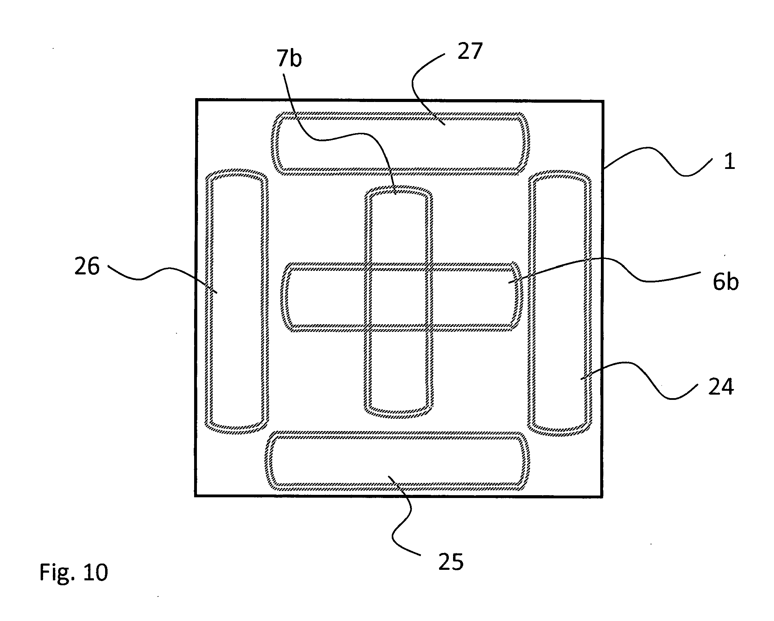

As a further variant, Fig. 10 shows a cooking top similar to the one of Fig. 5, and therefore the same reference numerals have been used for designating equivalent components.

In this example, the cooking top 1 comprises four perimetric windings 24, 25, 26 and 27 which, while they do not overlap, are arranged with their longitudinal axes in two orthogonal directions, whose projections on a plane define a closed area.

Within this closed area there are the windings 6a and 6b, which overlap each other.

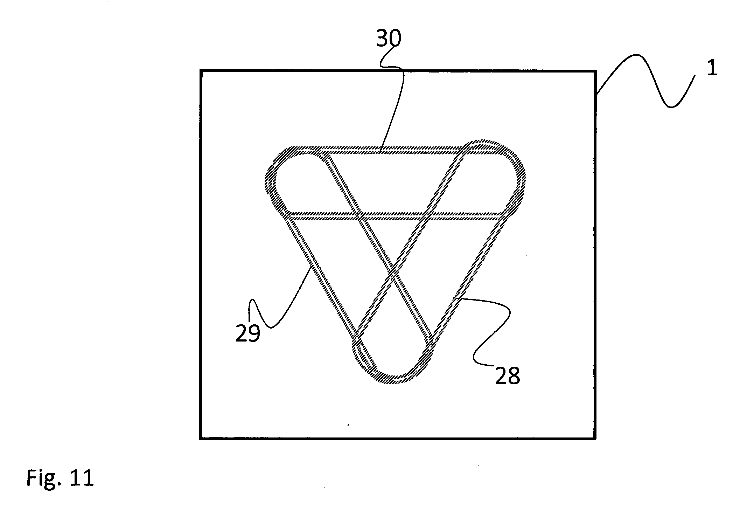

In Fig. 11, furthermore, the cooking top comprises three perimetric windings 28, 29, 30 arranged with their longitudinal axes in three different directions, whose projections on a plane define a closed area.

In the example of Fig. 11 the projections of the windings 28, 29 and 30 completely overlap one another at their ends, but as an alternative they may not overlap, as shown in the triangle 23 of Fig. 9.

Finally, the windings may be arranged in such a manner as to not be orthogonal to one another, while still having substantially equivalent configurations. This difference may be advantageous for making modular cooking tops having particular shapes.

## Claims

1. An induction cooking top (1) comprising at least three windings (2,3,4,5) having the shape of an elongated ring, **characterised in that** the longitudinal axes of said at least three windings (2,3,4,5) are arranged in at least two different directions (x,y) in a manner such that the projections of said longitudinal axes on a plane define a closed area in said plane.

2. A cooking top according to claim 1, wherein each end of the projection of one of said at least three windings on said plane overlaps the projection of at least one other winding.

3. A cooking top according to claim 2, wherein each end of the projection of one of said at least three windings on said plane overlaps one end of the projection of another one of said windings.

4. A cooking top according to claim 1 or 2 or 3, comprising additional windings, the projections of which on said plane are located at least partly inside said closed area.

5. A cooking top according to claim 3 or 4, **characterised in that** the projections of said additional inner windings on said plane overlap one another at least partially.

6. A cooking top according to claim 5, **characterised in that** both ends of the projections of said additional inner windings on said plane overlap the projections of adjacent windings on said plane.

7. A cooking top according to any one of claims 4 to 6, wherein the projections of at least two of said inner windings on said plane partly overlap and are arranged in different directions.

8. A cooking top according to claims 1 to 7, comprising at least three windings parallel to one another arranged in a first direction (x), and at least three windings parallel to one another arranged in a second direction (y), wherein the projection of each winding arranged in one of said directions overlaps at least partially the projections of all the windings arranged in the other direction.

9. A cooking top according to claim 8, wherein said first and said second directions (x,y) are orthogonal to each other.

10. A cooking top according to any one of claims 1 to 9, further comprising means adapted to detect the presence of a pot on the cooking top and to automatically activate at least one of said windings located under said pot.

11. A cooking top according to claims 1 to 10, wherein said windings have different power ratings.

12. A cooking top according to any one of claims 4 to 6, wherein the projections of the longitudinal axes of said additional inner windings on said plane are arranged in at least two different directions so as to define a closed area in said plane.

13. A cooking top according to any one of claims 1 to 12, further comprising a ferrite matrix arranged underneath said windings.

14. A cooking top according to claim 13, wherein said ferrite matrix further comprises embossed profiles adjacent to said windings.

15. A cooking top according to claim 14, wherein said embossed profiles define sunken portions in the areas which are not adjacent to said windings.

## Patentansprüche

1. Induktionskochplatte (1), umfassend wenigstens drei Windungen (2, 3, 4, 5), welche die Form eines länglichen Rings aufweisen, dadurch ge-kennzeichnet, dass die Längsachsen der wenigstens drei Windungen (2, 3, 4, 5) in wenigstens zwei verschiedenen Richtungen (x, y) in einer solchen Weise angeordnet sind, dass die Projektionen der Längsach-sen auf eine Ebene eine geschlossene Fläche in der Ebene definieren.

2. Kochplatte nach Anspruch 1, wobei jedes Ende der Projektion einer der wenigstens drei Windungen auf die Ebene mit der Projektion wenigstens einer anderen Windung überlappt.

3. Kochplatte nach Anspruch 2, wobei jedes Ende der Projektion einer der wenigstens drei Windungen auf die Ebene ein Ende der Projektion einer der anderen Windungen überlappt.

4. Kochplatte nach Anspruch 1 oder 2 oder 3, umfassend zusätzliche Windungen, deren Projektionen auf die Ebene wenigstens teilweise innerhalb der geschlossenen Fläche angeordnet sind.

5. Kochplatte nach Anspruch 3 oder 4, **dadurch gekennzeichnet, dass** die Projektionen der zusätzlichen inneren Windungen auf die Ebene miteinander wenigstens teilweise überlappen.

6. Kochplatte nach Anspruch 5, **dadurch gekennzeichnet, dass** beide Enden der Projektionen der zusätzlichen inneren Windungen auf die Ebene die Projektionen benachbarter Windungen auf die Ebene überlappen.

7. Kochplatte nach einem der Ansprüche 4 bis 6, wobei die Projektionen von wenigstens zwei der inneren Windungen auf die Ebene teilweise überlappen und in verschiedenen Richtungen angeordnet sind.

8. Kochplatte nach den Ansprüchen 1 bis 7, umfassend wenigstens drei einander parallele, in einer ersten Richtung (x) angeordnete Windungen und wenigstens drei einander parallele, in einer zweiten Richtung (y) angeordnete Windungen, wobei die Projektion jeder in einer der Richtungen angeordneten Windung zumindest teilweise die Projektionen sämtlicher in der anderen Richtung angeordneter Windungen überlappt.

9. Kochplatte nach Anspruch 8, wobei die erste und die zweite Richtung (x, y) orthogonal zueinander sind.

10. Kochplatte nach einem der Ansprüche 1 bis 9, ferner umfassend Mittel, welche zum Detektieren des Vorhandenseins eines Topfes auf der Kochplatte und zum automatischen Aktivieren wenigstens einer der unter dem Topf angeordneten Windungen eingerichtet sind.

11. Kochplatte nach den Ansprüchen 1 bis 10, wobei die Windungen unterschiedliche Nennleistungen aufweisen.

12. Kochplatte nach einem der Ansprüche 4 bis 6, wobei die Projektionen der Längsachsen der zusätzlichen inneren Windungen auf die Ebene in wenigstens zwei verschiedenen Richtungen angeordnet sind, um eine geschlossene Fläche in der Ebene zu definieren.

13. Kochplatte nach einem der Ansprüche 1 bis 12, ferner umfassend eine unterhalb der Windungen angeordnete Ferrit-Matrix.

14. Kochplatte nach Anspruch 13, wobei die Ferrit-Matrix ferner den Windungen benachbarte geprägte Profile umfasst.

15. Kochplatte nach Anspruch 14, wobei die geprägten Profile abgesenkte Bereiche in der Fläche definieren, welche nicht den Windungen benachbart sind.

## Revendications

1. Table de cuisson à induction (1) comportant au moins trois bobinages (2, 3, 4, 5) présentant la forme d'un anneau allongé, **caractérisée en ce que** les axes longitudinaux desdits au moins trois bobinages (2, 3, 4, 5) sont disposés dans au moins deux directions différentes (x, y) de manière à ce que les projections desdits axes longitudinaux sur un plan définissent une zone fermée dans ledit plan.

2. Table de cuisson selon la revendication 1, dans laquelle chaque extrémité de la projection de l'un desdits au moins trois bobinages sur ledit plan chevauche la projection d'au moins un autre bobinage.

3. Table de cuisson selon la revendication 2, dans laquelle chaque extrémité de la projection de l'un desdits au moins trois bobinages sur ledit plan chevauche une extrémité de la projection d'un autre desdits bobinages.

4. Table de cuisson selon la revendication 1 ou 2 ou 3, comportant des bobinages supplémentaires, dont les projections sur ledit plan sont situées au moins, en partie, à l'intérieur de ladite zone fermée.

5. Table de cuisson selon la revendication 3 ou 4, **caractérisée en ce que** les projections desdits bobinages internes supplémentaires sur ledit plan se chevauchent l'une l'autre au moins partiellement.

6. Table de cuisson selon la revendication 5, **caractérisée en ce que** les deux extrémités des projections desdits bobinages internes supplémentaires sur ledit plan chevauchent les projections des bobinages adjacents sur ledit plan.

7. Table de cuisson selon l'une quelconque des revendications 4 à 6, dans laquelle les projections d'au moins deux desdits bobinages internes sur ledit plan se chevauchent partiellement et sont disposées dans des directions différentes.

8. Table de cuisson selon les revendications 1 à 7, comportant au moins trois bobinages parallèles les uns aux autres disposés dans une première direction (x) et au moins trois bobinages parallèles les uns aux autres disposés dans une seconde direction (y), dans laquelle la projection de chaque bobinage disposé dans l'une desdites directions chevauche au moins partiellement les projections de tous les bobinages disposés dans l'autre direction.

9. Table de cuisson selon la revendication 8, dans laquelle lesdites première et seconde directions (x,y) sont perpendiculaires l'une à l'autre.

10. Table de cuisson selon l'une quelconque des revendications 1 à 9, comprenant, de plus, des moyens conçus pour détecter la présence d'un récipient sur la table de cuisson et pour activer automatiquement au moins l'un desdits bobinages situés sous ledit récipient.

11. Table de cuisson selon les revendications 1 à 10, dans laquelle lesdits bobinages présentent des puissances nominales différentes.

12. Table de cuisson selon l'une quelconque des revendications 4 à 6, dans laquelle les projections des axes longitudinaux desdits bobinages internes supplémentaires sur ledit plan sont disposées dans au moins deux directions différentes de façon à définir une zone fermée dans ledit plan.

13. Table de cuisson selon l'une quelconque des revendications 1 à 12 comprenant, de plus, une matrice de ferrites agencée sous lesdits bobinages.

14. Table de cuisson selon la revendication 13, dans laquelle ladite matrice de ferrites comporte, de plus, des profilés à bossages adjacents aux dits bobinages.

15. Table de cuisson selon la revendication 14, dans laquelle lesdits profilés à bossages définissent des parties en creux dans les zones qui ne sont pas adjacentes aux dits bobinages.
